Europäisches Patentamt

European Patent Office

Office européen des brevets

(11) Publication number: **0 452 627 A1**

# EUROPEAN PATENT APPLICATION

(21) Application number: 91102162.4

(22) Date of filing: 15.02.91

(51) Int. Cl.5: **G01P 3/38**, G06F 15/70

(30) Priority: 19.03.90 JP 69413/90

(43) Date of publication of application:
23.10.91 Bulletin 91/43

(84) Designated Contracting States:
CH DE FR GB LI

(71) Applicant: MITSUBISHI DENKI KABUSHIKI KAISHA
2-3, Marunouchi 2-chome Chiyoda-ku
Tokyo(JP)

(72) Inventor: Banzai, Masato, c/o Mitsubishi Denki Kabushiki K.
Nagoya Works, 1-14, Yadaminami 5-chome
Higashi-ku, Nagoya-shi, Aichi(JP)

(74) Representative: Lehn, Werner, Dipl.-Ing. et al
Hoffmann, Eitle & Partner Patentanwälte
Arabellastrasse 4
W-8000 München 81(DE)

(54) Analysing process and filming device for fast phenomena.

(57) A method and apparatus for analysis of picture frames containing images of rapidly moving objects; such as projectiles or vibrators, for determining position, velocity and acceleration parameters of the object. Individual picture frames taken by a high speed camera of the object against a background are logically processed to generate an image of only the background. This background image is inverted and used to remove the background from an original picture image, thereby yielding only an image of the object. The object image can be compared to a mask for identifying its location. The mask can be scanned using a course/fine process, as well as using known or derived position, velocity and acceleration information, to accurately identify position location of the object in each frame. A unique camera structure permits the generation of accurate object images using optical fiber illuminators positioned to provide back-lighting of the moving object.

*FIG. 1*

## BACKGROUND OF THE INVENTION

### 1. Field of the Invention

The present invention is concerned with a process which allows a rapidly moving object to be captured visually and movement analysis thereof to be performed. In particular, the invention concerns a process of allowing motion analysis of a projectile or a small-gauge wire-shaped vibrator, or the quantitative analysis of changes with time in the status of a volume, e.g. the number, shape and brightness of objects therein.

### 2. Description of the Background Art

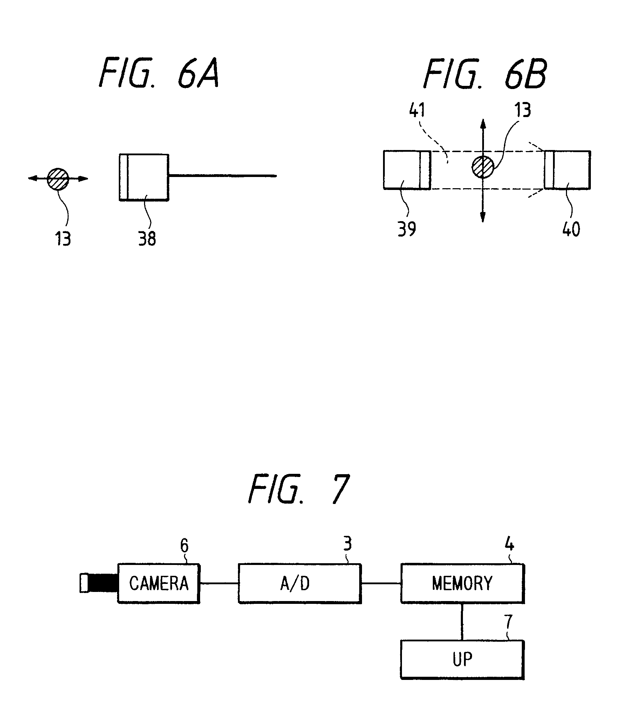

Fig. 7 illustrates an example of a conventional movement analyzing device for a fast moving article. The device is further disclosed in Japanese Patent Publication No. 1987-237358. The analyzing device consists of a video camera 6 for filming an object, an analog-to-digital converter 3 for converting video signals captured by the camera 6 into digital values, a picture memory 4 for temporarily storing picture data, and a dedicated processing circuit 7 for processing the picture data.

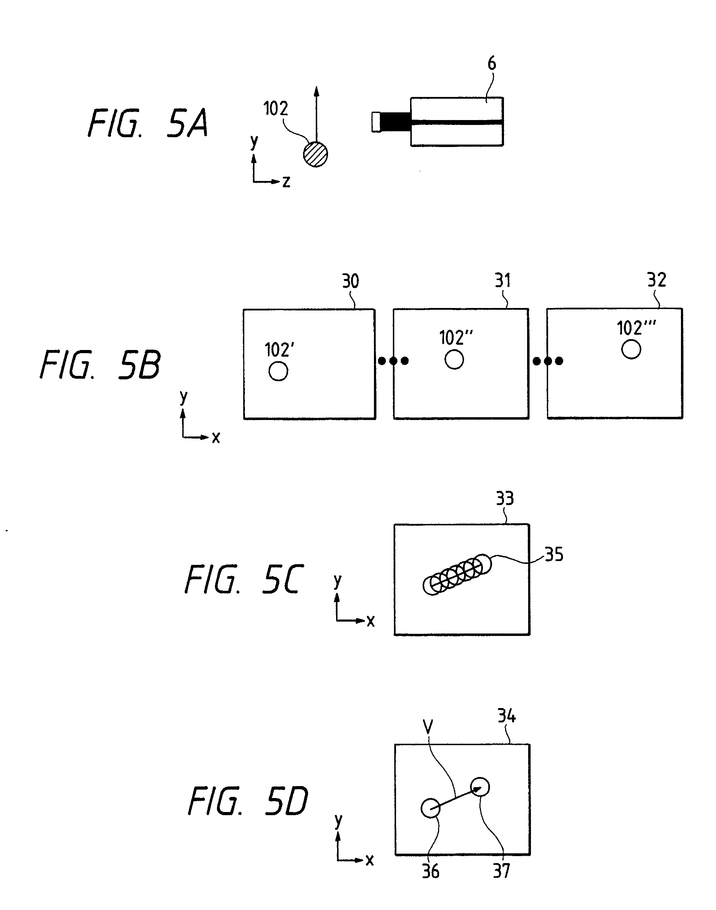

Figs. 5A-5D show an analyzing process using the device of Figure 7. The method comprises the steps of filming a fast moving article 102 with the video camera 6, as seen in Fig. 5A. The picture data is recorded in picture memories 30 to 32 sequentially, as shown in Fig. 5B, where the object movement with time in a two dimensional reference system (X, Y) is seen with respect to images 102'-102'''. A locus 35 of the object motion is obtained by ORing the picture memories 30 to 32 to form a single picture memory 33. A starting point 36 and an end point 37 are derived from the ANDing of the data in picture memory 33 with the data in picture memories 30 and 32, as seen in picture memory 34 in Fig. 5D. An average velocity vector V is derived from the time elapsed and the X and Y distances between the two points.

In order to separate an object recorded in a picture from the picture background, a process including ORing an inverted picture, recording only the background, with a picture recording the object has been used and is taught in Japanese Patent Publication No. 1988-246678.

Figs. 6A and 6B illustrate conventional vibration analyzing devices and processes for small-gauge wire vibrators. As shown in Fig. 6A, one conventional process employs an acceleration sensor 38 for measuring the vibration of object (wire) 13. The sensor 38 is disposed adjacently to the object 13, in the direction of vibration thereof. Another process measures the vibration of object 13, as shown in Fig. 6B, by causing a narrow light beam 41 to be generated from a light emitting element 39 in a direction orthogonal to the direction of vibration, and to be received by a light receiving element 40. The position of the object 13 as it interrupts the light beam 41 is identified by detecting the change in the intensity of the light received by the light receiving element 40. In these conventional processes, electrical signals derived from such sensors are entered into a dedicated waveform analyzing device, such as an FFT (Fast Fourier Transform) analyzer, to conduct vibration analysis. However, the movement analysis of an object which changes its position with time is limited when these processes are used. An improvement can be obtained if movement is measured on the basis of picture frames filmed by a video camera. By recognizing the position of the object on a filmed picture frame basis, the subsequent analyses, using various conventional techniques, are made more useful.

One conventional video process converts a picture having only an extracted object using a predetermined binary threshold value. Scanning in the longitudinal and horizontal directions causes the position of a measured object to be recognized within a picture frame filmed by a video camera. However, if the threshold value of the binary conversion is strictly defined in this process, the contour of the object may become discontinuous or indistinct depending on the lighting conditions at the object at the time of filming, resulting in poor accuracy of recognition.

This conventional video method also requires that the measured object be separated from its background beforehand. Where a sequence of images are to be ORed, as mentioned above, the presence of background data places an undesirable load on the processing capacity of the system, makes processing take too long and requires the use of too much memory. In order to obtain separation, one must obtain an image of the background that does not include the object to be measured and then subtract that background from the video picture. However, if the background changes at the time of filming, it is difficult to extract only the object to be measured.

When applied to analyze a small-gauge wire-shaped vibrator, the conventional video processes may employ various sensors, as mentioned previously, to capture the vibration waveform of the wire because it is difficult to visually capture the object. However, such processes cannot be used to make complicated analyses, as where a single point on the object is to be measured and an analysis is to be performed simultaneously of the vibration of the object and another phenomena incidental thereto. Such analysis would be relevant to, for example, the vibration of a wire electrode and an electrical discharge phenomenon occurring between the wire electrode and a workpiece on a wirecut electrical discharge machine.

## SUMMARY OF THE INVENTION

It is, accordingly, an object of the present invention to overcome the disadvantages of the prior art devices and processes by providing a method of separating the image of an object to be measured from its background without requiring beforehand a background image that does not include the object to be measured.

It also is an object of the present invention to separate the image of an object to be measured from its background by reusing the same storage resource for storage of original and composite pictures.

It is yet another object to provide a process of recognizing the location in a picture frame of an object whose image profile is not distinct or continuous due to object motion.

It is another object to provide a process of recognizing with high accuracy the position of an object extracted from a background image.

It is a further object to provide a process for facilitating the accurate analyses of the vibration of an object and that of other phenomenon incidental thereto at the same time.

It is yet a further object to provide a new filming device appropriate for a film-based vibration analysis of a small-gauge wire-shaped vibrator.

A first embodiment of the present invention comprises the steps of filming and recording on multiple frames an object that varies its position at an extremely high speed by means of a high speed video system; converting recorded composite background and object picture frames into digital information by means of an analog-to-digital converter; entering the digital data into memories; and analyzing the movement of the object by means of a computer. The computer obtains a composite background picture by ANDing multiple picture frames that record the object and the background over a period of time. The AND process can reuse the same memory resource for storage of original and composite pictures. The object is separated from the background by ORing a picture of the object with the composite background picture. The resultant background-only picture can be used in an analysis of object movement.

A second embodiment of the present invention allows a pattern, having a shape identical to that of the object, to be scanned relative to a picture from which the background has been separated and an object image remains. The pattern oan be the object shape as it appears in motion in a picture. A computer is operative to recognize a position having a minimum difference between the object image and the pattern as a position in the picture where the object exists. Changes in object position for several successive pictures can be used as a basis for movement analysis.

A third embodiment of the present invention allows a pattern having a shape identical to the profile of at least a portion of a small-gauge wire-shaped vibrator to be scanned relative to a picture from which the background of the small-gauge wire-shaped vibrator has been separated. A computer is operative to recognize a position having a minimum difference between the small-gauge wire-shaped vibrator and the pattern as a position where the small-gauge wire-shaped vibrator exists. Changes in object position for several successive pictures can be used as a basis for movement analysis.

According to the second and third embodiments, the position of an object to be measured may be recognized even if the contour of the object to be extracted from the picture is not continuous or precise.

A fourth embodiment of the present invention is a fast phenomenon filming device for visually capturing an object to be measured, the device comprising a magnifying lens system and fiber illuminators for focusing light on the object. According to the fourth embodiment, light is focused on an object to be measured by the fiber illuminators and the object is magnified by the magnifying lens and filmed.

## BRIEF DESCRIPTION OF THE DRAWINGS

Fig. 1 is a system configuration diagram of a movement analyzing device according to an embodiment of the present invention.

Fig. 2A illustrates a sequence of a projectile movement analysis processing method according to the embodiment shown in Fig. 1.

Figs. 2B and 2C illustrate a filmed image and a process of removing background information, respectively.

Fig. 2D illustrates an automatic recognition process for determining the position coordinates of the projectile.

Figs. 2E and 2F illustrate the results of analysis processing of the bullet movement.

Figs. 3A and 3B illustrate two orthogonal views of a filming system for a small-gauge wire-shaped vibrator.

Fig. 3C illustrates a sequence of vibration analysis processing.

Fig. 3D illustrates the filmed image of a vibrating wire and a rectangular pattern as well as a method of automatically recognizing the position coordinates of the vibrator.

Figs. 3E-3I illustrate the results of vibrator analysis.

Fig. 3J illustrates a second embodiment of the present invention using two orthogonally oriented detectors.

Figs. 4A and 4B illustrate a process for generating a background image from a series of video picture frames with efficient use of memory capacity.

Figs. 5A-5D illustrate an example of a conventional movement analyzing process for a fast moving article.

Figs. 6A and 6B illustrate conventional vibration analyzing processes known in the art.

Fig. 7 illustrates an example of a conventional movement analyzing device for a fast moving article.

DESCRIPTION OF THE PREFERRED EMBODIMENTS

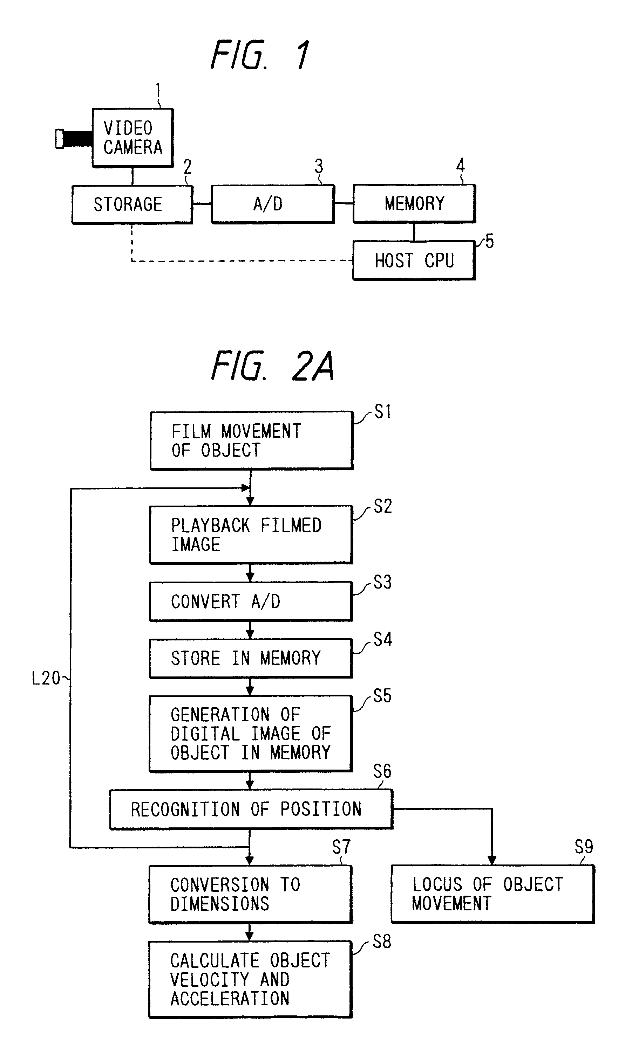

One embodiment of the present invention will now be described with reference to the above drawings. Fig. 1 illustrates the high speed video system of a fast phenomenon analyzing device in accordance with the present invention. The system comprises a high-speed video camera 1 and a high-speed video storage 2, an analog-to-digital converter 3 for converting video outputs of the high-speed video storage 2 into digital information, a picture memory 4 for storing picture data converted into digital information, and a host computer 5 for controlling the system and its components.

In a simple example of its capabilities, the system may be used to perform a quantitative analysis of the moving locus, velocity and acceleration of a bullet shot from a pistol. The sequence of the analysis in flow chart form is outlined in Fig. 2A. Specifically, from the instant that a bullet is shot from a pistol across the field of view of the high-speed video camera 1, the camera records at the rate of 2000 frames per second in step S-1. Following this recording, the film is played back in step S-2 and each picture frame in the film sequence is converted into digital information in step S-3 and then entered into the picture memory 4 in step S-4. The information in picture memory 4 can be processed in a variety of ways to obtain sufficient data that is useful in the performance of movement analysis of the bullet. The process begins with the generation of the bullet image for individual frames and the conversion of that image to digital form, as set forth in step S-5.

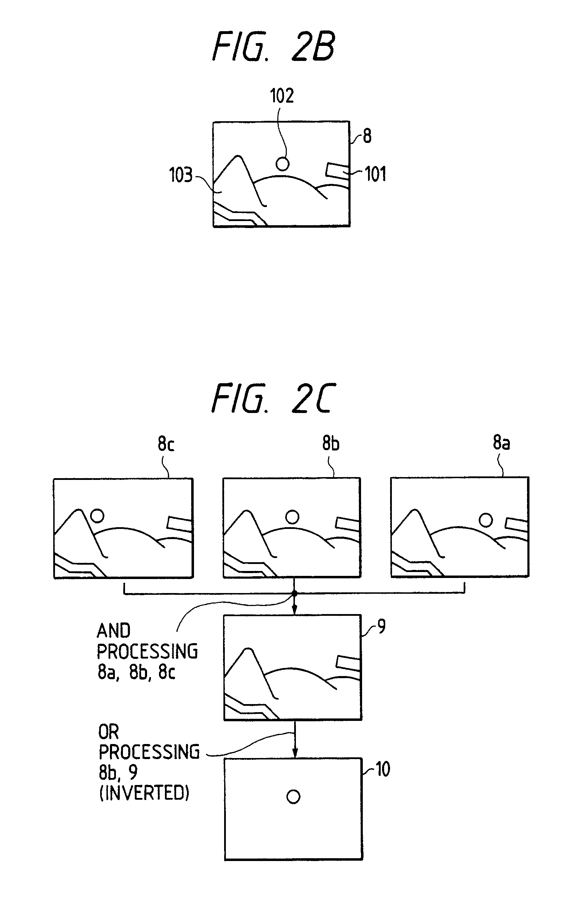

For purposes of explaining the process of the step S-5, reference is made to Figure 2B where one frame 8 of the filmed sequence is illustrated hypothetically and shows a gun muzzle 101, a bullet 102 and a background 103 of mountains and a river. In order to extract only the object, i.e. the bullet, from the filmed scene, a process is used as illustrated in Fig. 2C, where the picture content on each line is input to an AND gate and an OR gate function as shown. First, a plurality of frames 8a, 8b and 8c are selected from among the frames to be analyzed and are then ANDed. Since only the non-movable part remains as a result, it is used as a background image 9. The data representing this background image 9 is inverted, and the inverted image is ORed with the frame 8b of the filmed picture to provide a picture 10 of only the bullet. Background subtraction may be easily performed for subsequent frames using the background image developed per the above process.

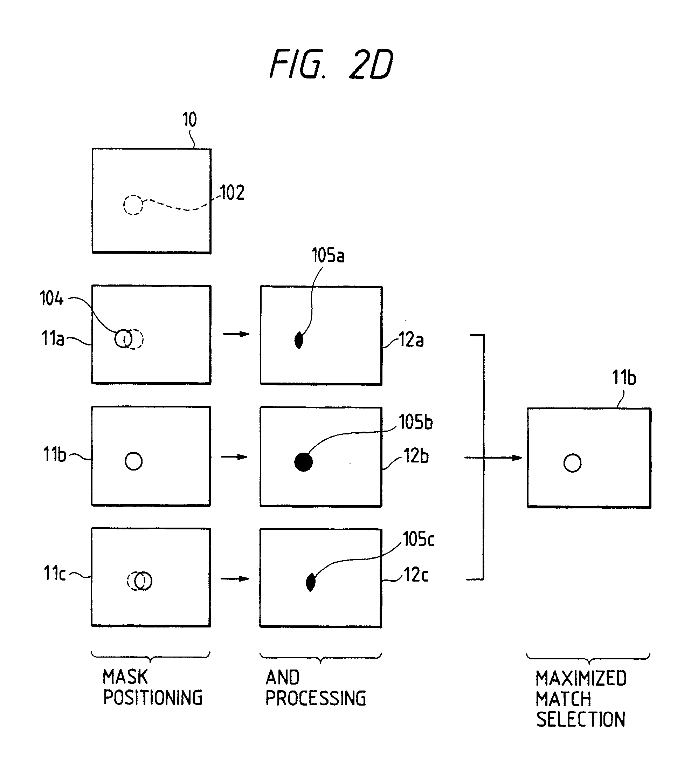

The next step in the Figure 2A process is the identification of bullet position in each frame, in accordance with step S-6. An automatic process of identifying bullet position coordinates may be understood with reference to a simplified example in Fig. 2D. First, the data for a first picture 10, recording the bullet 102 extracted by background subtraction, is ANDed with the data of a template or mask 11a, having a circular pattern 104 equivalent to the shape of the bullet 102, to obtain data for a picture 12a having an AND result 105a. Similarly, the data for picture 10 is ANDed with picture data 11b and 11c, where the position of the pattern 104 is scanned on the screen. As a result of this AND processing, data for pictures 12b, 12c are obtained having AND results 105b and 105c. In these pictures, the position (X, Y) of the pattern 104 in mask 11b on the screen, corresponds to the position (X, Y) of the bullet in picture 10. This ANDed value is maximum at a position having a minimum difference between the picture and mask, and is stored in the computer 5 as a position where the bullet exists. When the difference is not a minimum but is less than a maximum value, as with areas 105a and 105c, based on the positions (X, Y) of the respective masks, the bullet position can be obtained by interpolation.

Because the object moves rapidly, even compared to the speed of video recording, the image of the object on each frame may be distorted. For example, it may not be possible to obtain a picture of a perfectly round object at the relevant speed of a bullet. An image of the object will be elongated in the direction of travel for the object due to object distortion and camera speed, and its contour may appear discontinuous and indistinct. Clearly, problems can arise when the actual profile or contour of the object at rest is to be matched to the high speed image in a picture frame. In order to overcome this problem, the mask pattern used may be generated, electronically or under operator control, to resemble that which actually appears on the film. In the case of a round object, the object mask would have an elongated profile that is substantially approximate to that which is seen in the picture. Since a decision that a match has occurred for purposes of position determination is dependent upon maximizing the coincidence of a mask and the object image, substantial accuracy can be achieved.

The measurement of one picture is thus completed and such processing steps comprise a cycle. Similar processing cycles are performed for the number of frames filmed, i.e. 2000 pictures, to provide a time series of bullet position coordinates $(X_1, Y_1$ to $X_{2000}, Y_{2000})$.

When processing is begun, the identification of the likely initial location of the object of interest may be selected by an operator viewing the first of a sequence of picture frames, may be known based upon the subject matter being filmed (i.e. a gun shot from right to left), may be determined by one or a series of pattern scans (i.e., a conventional raster or customized scan) or may be determined by a combination of these techniques. Using any of these techniques, a plurality of sequential positions of the pattern 104 in a pattern scan are compared to the initial frames until a series of matches is obtained and a locus of travel for the object can be established. The masks may be pre-stored or electronically generated, but in either case, have respective positional information associated herewith.

When a scan is used to identify the position of the object, initially a coarse scan can be conducted to obtain an estimate of the likely position of the object in the frame. Fine scanning of the frame can then be conducted in order to obtain maximum overlap of the mask and the object image. Once a position of the object in a first frame is identified, processing of second and subsequent frames can be conducted more efficiently, with the range of candidate locations for the object substantially narrowed, and scanning thus minimized. For example, with the second frame, the approximate position of the object is known but its direction is not known. Following object detection in the second frame, the direction of movement is known and the likely position of the object in subsequent frames is predictable. An analysis of object movement at this point becomes very efficient, when the processing is repeated, via loop 20 in Fig. 2A.

Once object position has been recognized in Fig. 2A, step S-6, the analytic process proceeds to convert the position information into actual dimensions at step S-7, and to identify the locus of object movement at step S-9. In this regard, if the diameter of the bullet in the picture memory is represented by four picture elements and the actual diameter of the bullet is 10mm, the length of one picture element is 10/4 or 2.5 (mm/picture element). Assuming that this value is a constant of correction D to the actual dimension and the position of the pistol muzzle $(X_0, Y_0)$ is a coordinate origin, the actual coordinate value $(X_{i-1}, Y_{i-1})$ in the two-dimensional space of the bullet $i/2000$ seconds later, where i is the number of successive frames being processed, is derived from:

$$X_{i-1} = (X_{i-1} - X_0) * D$$
$$Y_{i-1} = (Y_{i-1} - Y_0) * D$$

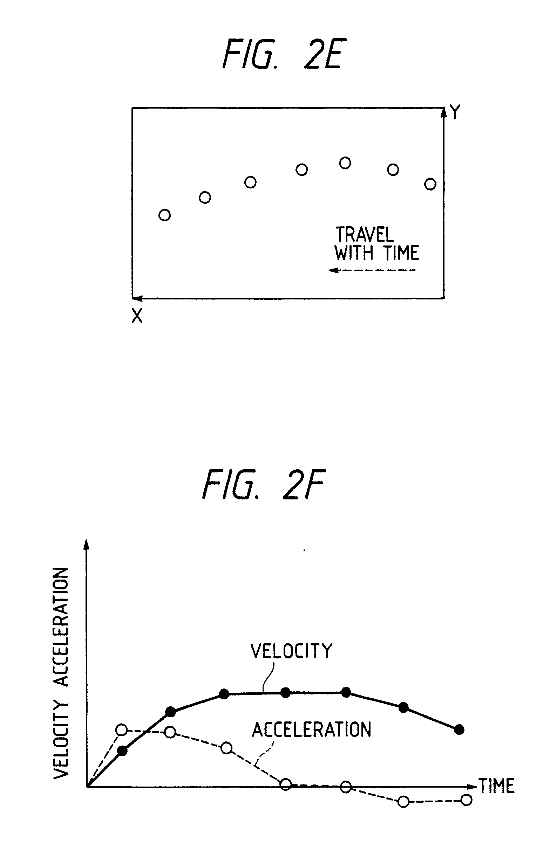

Further, by identifying a multiple of such coordinate values in the X, Y plane, the locus of the bullet as shown in Fig. 2E is obtained. The velocity vector $V_{i-1} = (VX_{i-1}, VY_{i-1})$ and acceleration vector $A_{i-1} = (AX_{i-1}, AY_{i-1})$ of the bullet $i/2000$ seconds later, where data for two successive frames are being used, are derived from:

$$VX_{i-1} = (X_i - X_{i-2})/(2/2000)$$
$$VY_{i-1} = (Y_i - Y_{i-2})/(2/2000)$$
$$V_{i-1} = \sqrt{(VX_i\text{-}1^2 + VY_i\text{-}1^2)}$$
$$AX_{i-1} = (VX_i - VX_{i-2})/(2/2000)$$
$$AY_{i-1} = (VY_i - VY_{i-2})/(2/2000)$$
$$A_{i-1} = \sqrt{(AX_i\text{-}1^2 - AY_i\text{-}1^2)}$$

The curves of velocity and acceleration are determined at step S-8 of Fig 2A and change with time, as shown in Fig. 2F. Clearly, on this basis, a quantitative analysis of the locus, velocity and acceleration of the bullet can be obtained.

An example will now be described of the vibration analysis of a small-gauge wire-shaped vibrator.

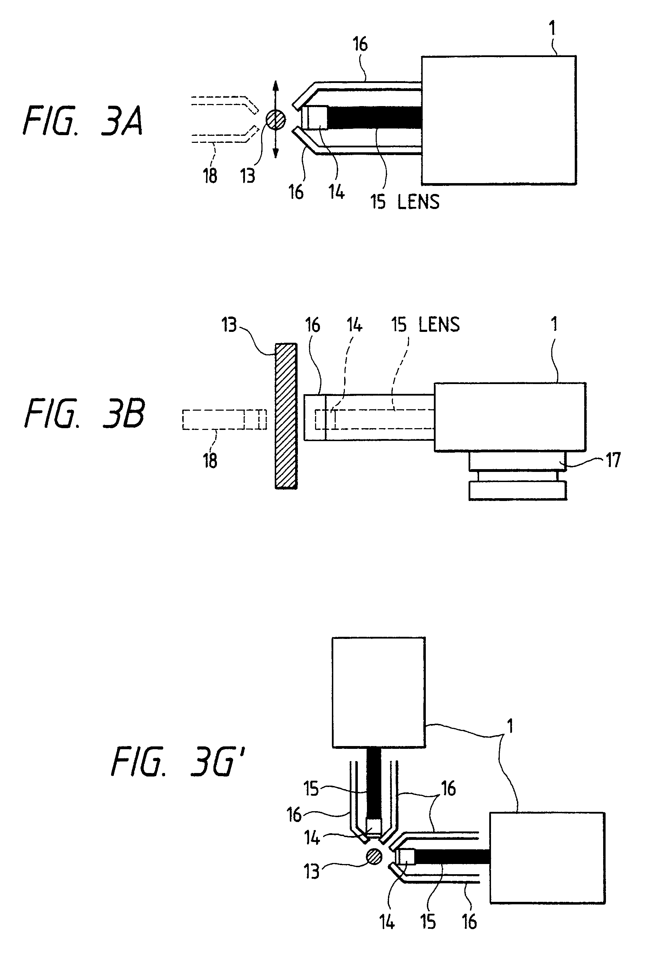

A filming system configured as shown in Fig. 3A may be used for filming the vibrating movement of the object, i.e., wire 13. A microscope eyepiece 14 is focused on an area traversed by the wire and is optically connected to a relay lens 15 for magnifying a detected image of the wire 13 and providing it to video camera 1. Optical fiber illuminators 16 are positioned to provide light beams, narrowed into a slit shape, at opposite sides of the eyepiece 14 and directed toward the wire 13. The light source for the optical fiber illuminators 16 is disposed in the video camera 1. The optical fiber illuminators 16 are disposed on opposite sides of the eyepiece to ensure easy optical fiber angle adjustment, which is required to focus the light from the optical fiber illuminators 16 onto the wire 13. As seen in the orthogonal view of Figure 3B, the video camera 1 is mounted on a precision movable rack 17 to allow fine positioning at the time of filming. Further, in order to capture the edge of the wire 13 clearly, the illuminators 16 on the video camera 1 side may be disposed in a position opposite that of the eyepiece and lens, as backlighting fiber illuminators 18. Alternatively, another high-speed video camera having similar components may be disposed as shown in Fig. 3J to allow filming in the orthogonal direction so that the vibration of the wire 13 may be captured in both X and Y directions.

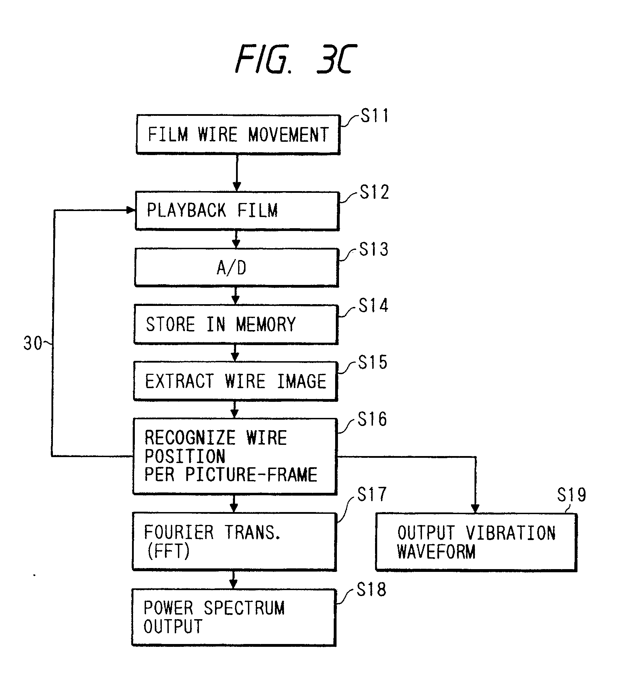

An analytical sequence for the wire vibration captured by the filming system of Figures 3A and 3B is represented as a flow chart in Fig. 3C. Referring to the flow chart in greater detail, first, the vibration of the wire 13 is filmed by the high-speed video camera 1 at the rate of 12000 frames per second, as seen in Step S-11. Each picture is played back (step S-12), is converted into digital information (Step S-13) and is entered into the picture memory 4 (Step S-14).

As with the bullet in the example of Figures 2A-2G, the information in picture memory 4 showing the movement of the vibrating wire 13 can be processed in a variety of ways to obtain data that would be useful in the performance of movement analysis. The process begins with the generation of the wire image for individual frames and the conversion of that image to digital form, as set forth in step S-15.

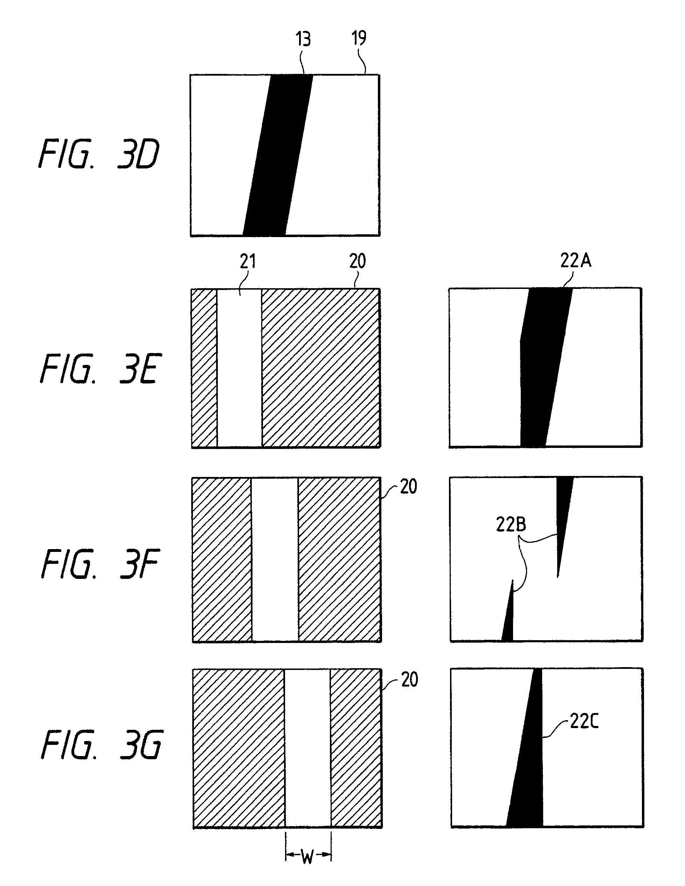

For purposes of explaining the process of step S-15, reference is made to Figure 3D where a magnified portion of one filmed video frame, containing the profile of the vibrating wire 13, has been depicted. As seen in the Figure, the wire 13 is shaped substantially like a rectangle having an identifiable width. The wire 13 is simply a moving object under analysis and its image may be extracted from the picture using an arithmetic method similar to that used for the bullet movement analysis. Specifically, a rectangular mask 20 (pattern), having an aperture 21 with a width (W) equivalent to that of the object, taking into consideration the ratio of magnification, is retrieved from memory. This mask aperture 21 is scanned left to right on the screen as seen in Figures 3E, 3F and 3G, respectively, and the results of subtraction from the prepared picture memory 19 of the original picture are captured as "differences" 22A-22C. The aperture position in Figure 3F has the least difference and in step S-16 of Figure 3C is recognized by the host computer as a position where the object exists.

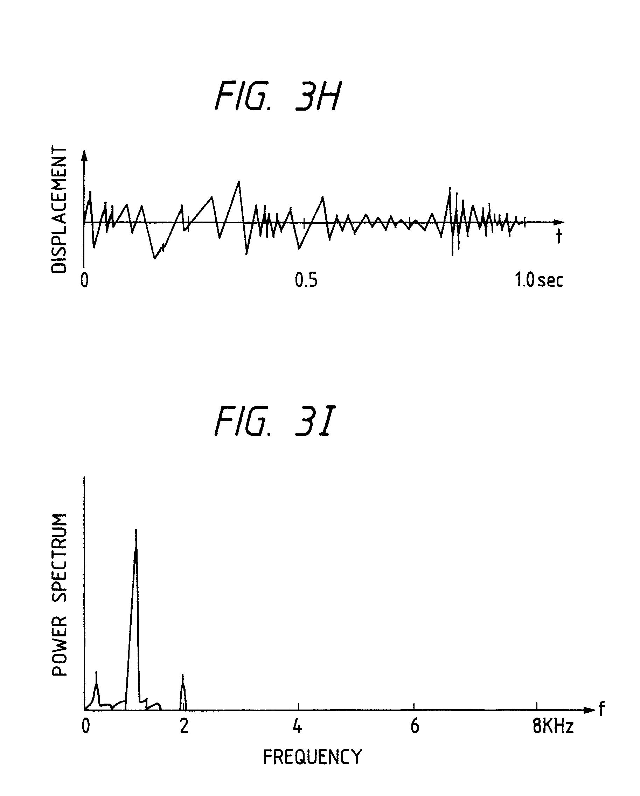

By repeating this cycle 12000 times, as noted by line 30, the time series position data of the wire 13 for one second is obtained. After the time series data is converted into actual dimensions, the vibration waveform of the wire 13 can be drawn, as in step S-19, with displacement recorded along the vertical axis and time along the horizontal axis, as shown in Fig. 3H. Furthermore, a Fourier transform (FFT) may be performed in step S-17 on the time series data. On the basis of the FFT output, in step S-18, a graph can be drawn with a power spectrum taken on the vertical axis and frequency on the horizontal axis, as shown in Figure 3I.

As described above, it will be apparent that the present invention eliminates the need to prepare beforehand a background image which does not include an object to be measured in order to separate the object from the background and allows the object alone to be extracted accurately, even if the background changes at the time of filming.

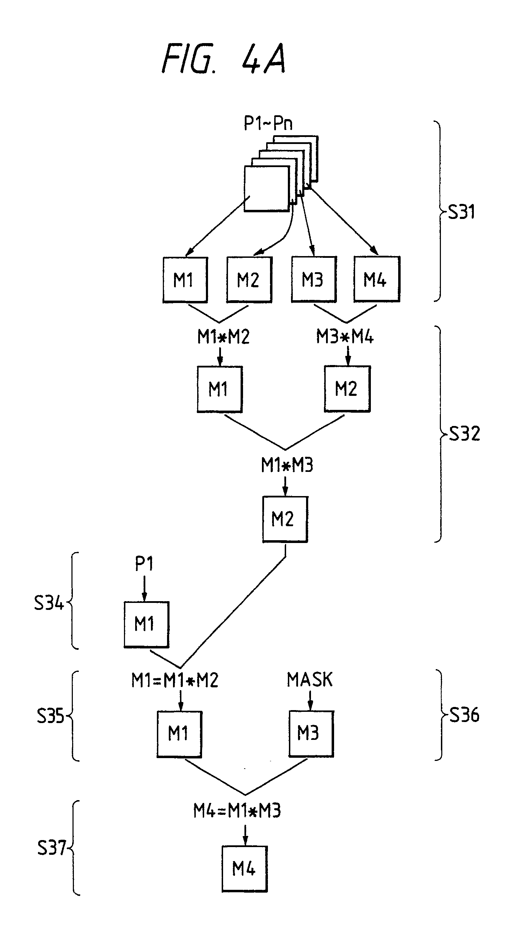

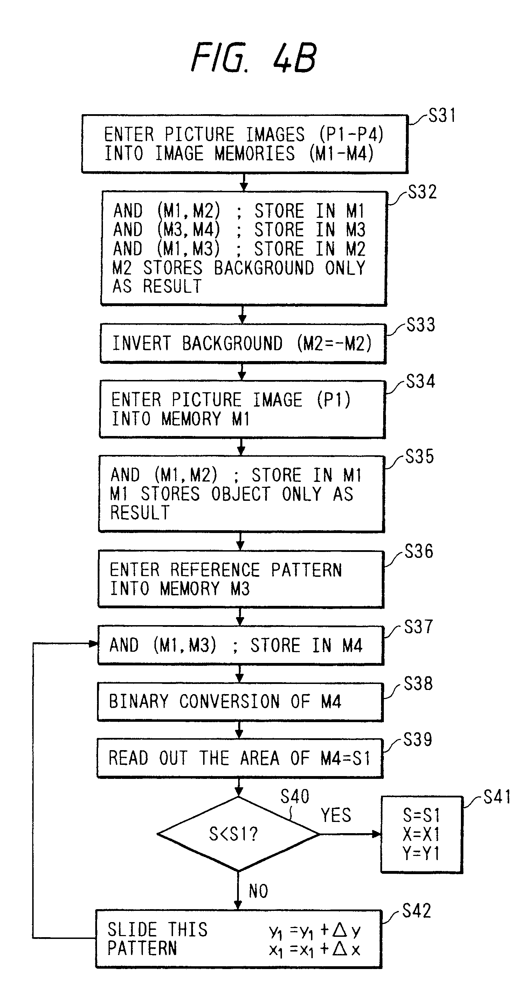

A description of the efficient processing of information from plural recorded video frames in order to obtain a background image without the object is disclosed with respect to Figures 4A and 4B. Figure 4B shows a flow chart for image processing and Figure 4A shows the use of image memory in the process. As seen in the two figures, the background image can then be efficiently subtracted from the stored video frames in order to obtain a clear image of the object in each frame. The object image permits subsequent position analysis, as well as velocity and acceleration analysis, as seen in Figure 4B.

In Figure 4A, plural image frames P1-Pn, each taken of a moving object against a background over a period of time, are generated. Referring to Figures 4A and 4B, background information may be obtained by placing a limited number of the image frames P1-P4 in respective frame memory locations M1-M4 (step S-31). Only four frames are illustrated, however, the accuracy clearly is increased with an increase in the number of picture frames that are processed. The content of several pairs of frames are ANDed in step S-32 and returned to the memory location of one of the two frames in order to save memory. For example, the frames in memories M1 and M2 are ANDed and the result stored in memory M1. Similarly, the frames in memories M3 and M4 are ANDed and the result stored in memory M3. With M2 now vacant, the new content of memories M1 and M3 are ANDed and stored in memory M2. Because the above procedure results in the AND processing of information from several pairs of memories, the content of memory M2 at the end of step S-32 is a picture of only background.

In step S-33, the content of memory M2 is inverted (i.e., M2 = -M2 (see Fig. 4B)) and, in step S-34, a picture recording both objects and background (e.g. P1) is entered into one of the now vacant memories (e.g. M1). The content of the inverted background-only memory M2 is combined with the content of the picture in memory M1 and the result is a picture of only the object, in step S-35.

Once the object alone is recorded in a frame, in step S-36, a predetermined pattern having an identified position of the object (i.e. a mask) is stored in memory M3 for analysis of the position of the object. A comparison of the predetermined pattern frame (M3) to the object frame is conducted in step S-37 and the result placed in memory M4. A binary conversion of the amount of image coincidence in memory M4 is obtained in step S-38 and the binary value of M4 is read out and stored at S1. The value of S1 is compared against a threshold, i.e. minimum value for coincidence, at step S40 and if above the threshold, the positional coordinates of the object in the mask are placed into memory at step S41. If the value of S1 is below the threshold S at step S40, the pattern is moved by an incremented value $\Delta x$ or $\Delta x, \Delta y$ and the comparison process at step S37 is repeated by scanning the mask in positional increments until the threshold value S is crossed. At that point, a match may be identified. Alternatively, the threshold may simply identify the presence of a position of the object in a mask area or the presence of the object in a coarse mask area. Thereafter, a fine scan, using the same or a different mask could be conducted in a similar manner to identify with a desired degree of precision the location of the object. As would be apparent to one of ordinary skill, a variety of scan techniques can be employed, and these techniques can utilize position, velocity and acceleration information to efficiently determine the position of an object in a frame under current analysis.

The preferred embodiments can be used where changes occur in the background image. Generally, such changes are minor, compared to the changes due to object movement and appear only as artifacts on the object image created when background is removed from a picture image. In any event, these artifacts will be disregarded when the object image is processed with a mask in order to identify a match for position determination. As previously noted, such match can be conducted on a variety of bases, such as coarse and fine scan techniques, using object masks that are substantially matched to the contour of the object image in the picture frame.

The second and third embodiments further allow the analysis of vibration, and that of other phenomenon incidental to the vibration, such as discharge phenomenon, to be made together so that complex analyses may be conducted. As with the changing position of the object, in each frame, the changes in this background data also can be analyzed or, if desired, simply removed. Even though artifacts for these changing background phenomena will appear when a background-only frame so inverted and ANDed with a frame of interest, proper selection of the objected mask for position analysis will permit these artifacts to be ignored.

Finally, the illuminating apparatus of the invention allows the contour of particularly a small-gauge wire-shaped vibrator to be filmed distinctly.

## Claims

1. A fast phenomenon analyzing process, comprising; filming and recording an object which varies its position at an extremely high speed; converting images so obtained into digital information; entering said digital information into memories; obtaining a background image by ANDing multiple images recording the object and its background and separating the object from the background by subtracting the background image from the image to be so separated; and analyzing the movement of the object arithmetically.

2. A fast phenomenon analyzing process according to claim 1, wherein said step of background subtraction is performed by inverting said background image and ANDing the inverted background with the image to be separated.

3. A fast phenomenon analyzing process according to claim 1, wherein said arithmetic analysis includes determining the velocity and acceleration of said object.

4. A fast phenomenon analyzing process according to claim 1, wherein said object is a vibrating member.

5. A fast phenomenon analyzing process according to claim 1, further including the step of analyzing images of said object, by scanning a mask in the expected shape of said object in said image, with respect to said image, and determining the position of said object by matching said mask with said object.

6. A fast phenomenon analyzing process according to claim 1, wherein said ANDing step is performed by storing ANDing results in a memory from which an ANDing addend was read out.

7. A fast phenomenon analyzing process, comprising; filming and recording an object to be measured which varies its position at an extremely high speed; converting images so obtained into digital information by means of an analog-to-digital converter; entering said digital information into memories; and analyzing the movement of the object by scanning a pattern having a shape comparable to the object relative to an image from which the background of the object has been removed; and recognizing a position having a minimum difference between the object and the pattern as a position of the object.

8. A fast phenomenon analyzing process, comprising; filming and recording an object to be measured which varies its position at an extremely high speed by means of a video system; converting video images into digital information by means of an analog-to-digital converter; entering said digital information into memories; and analyzing the movement of the object by scanning a pattern having a shape comparable to the object relative to an object image from which background has been removed, and recognizing object position by detecting a minimum difference between the object image and the pattern as the object position.

9. A fast phenomenon filming device for recording an object to be measured, comprising a magnifying lens system focussed on said object and fiber illuminators for focussing light on the object.

# FIG. 1

```
        1
   ┌──────────┐
   │  VIDEO   │
───┤  CAMERA  │
   └────┬─────┘
        │       2              3              4
   ┌────┴─────┐   ┌──────────┐   ┌──────────┐
   │ STORAGE  ├───┤   A/D    ├───┤  MEMORY  │
   └────┬─────┘   └──────────┘   └────┬─────┘
        ┆                              │
        ┆                       ┌──────┴─────┐  5
        ┆┄┄┄┄┄┄┄┄┄┄┄┄┄┄┄┄┄┄┄┄┄┄┤  HOST CPU  │
                                └────────────┘
```

# FIG. 2A

```
              ┌──────────────────┐  S1
              │  FILM MOVEMENT   │
              │  OF OBJECT       │
              └────────┬─────────┘
        ┌──────────────│
        │     ┌────────▼─────────┐  S2
        │     │  PLAYBACK FILMED │
        │     │  IMAGE           │
        │     └────────┬─────────┘
        │     ┌────────▼─────────┐  S3
        │     │  CONVERT A/D     │
        │     └────────┬─────────┘
        │     ┌────────▼─────────┐  S4
        │     │  STORE IN MEMORY │
        │     └────────┬─────────┘
        │     ┌────────▼─────────┐  S5
        │     │  GENERATION OF   │
   L20  │     │  DIGITAL IMAGE OF│
        │     │  OBJECT IN MEMORY│
        │     └────────┬─────────┘
        │  ┌───────────▼──────────────┐  S6
        └──┤ RECOGNITION OF POSITION  ├──────────┐
           └───────────┬──────────────┘          │
           ┌───────────▼─────────┐  S7     ┌──────▼──────────┐  S9
           │  CONVERSION TO      │         │ LOCUS OF OBJECT │
           │  DIMENSIONS         │         │ MOVEMENT        │
           └───────────┬─────────┘         └─────────────────┘
           ┌───────────▼─────────┐  S8
           │  CALCULATE OBJECT   │
           │  VELOCITY AND       │
           │  ACCELERATION       │
           └─────────────────────┘
```

9

# FIG. 2B

102

8

103

101

# FIG. 2C

8c

8b

8a

AND
PROCESSING
8a, 8b, 8c

9

OR
PROCESSING
8b, 9
(INVERTED)

10

# FIG. 2D

MASK
POSITIONING

AND
PROCESSING

MAXIMIZED
MATCH
SELECTION

# FIG. 2E

TRAVEL
WITH TIME

# FIG. 2F

VELOCITY ACCELERATION

VELOCITY

ACCELERATION

TIME

FIG. 3A

16

1

18  13

16  14

15  LENS

FIG. 3B

13  16  14  15  LENS  1

18

17

FIG. 3G'

1

1

15  16

16

14

13

14  15  16

# FIG. 3C

FILM WIRE MOVEMENT $\quad$ S11

↓

PLAYBACK FILM $\quad$ S12

↓

A/D $\quad$ S13

↓

STORE IN MEMORY $\quad$ S14

↓

EXTRACT WIRE IMAGE $\quad$ S15

↓

RECOGNIZE WIRE POSITION PER PICTURE-FRAME $\quad$ S16

30

↓

FOURIER TRANS. (FFT) $\quad$ S17

↓

POWER SPECTRUM OUTPUT $\quad$ S18

OUTPUT VIBRATION WAVEFORM $\quad$ S19

FIG. 3D

FIG. 3E

FIG. 3F

FIG. 3G

## FIG. 3H

## FIG. 3I

# FIG. 4A

# FIG. 4B

```
ENTER PICTURE IMAGES (P1-P4)          ⌐S31
INTO IMAGE MEMORIES (M1-M4)
```

```
AND (M1,M2) ; STORE IN M1             ⌐S32
AND (M3,M4) ; STORE IN M3
AND (M1,M3) ; STORE IN M2
M2 STORES BACKGROUND ONLY
AS RESULT
```

```
INVERT BACKGROUND (M2=-M2)            ⌐S33
```

```
ENTER PICTURE IMAGE (P1)              ⌐S34
INTO MEMORY M1
```

```
AND (M1,M2) ; STORE IN M1             ⌐S35
M1 STORES OBJECT ONLY AS
RESULT
```

```
ENTER REFERENCE PATTERN               ⌐S36
INTO MEMORY M3
```

```
AND (M1,M3) ; STORE IN M4             ⌐S37
```

```
BINARY CONVERSION OF M4               ⌐S38
```

```
READ OUT THE AREA OF M4=S1            ⌐S39
```

S40

$S < S1?$ — YES →

```
S=S1        ⌐S41
X=X1
Y=Y1
```

NO

```
SLIDE THIS        y₁ =y₁ +△y          ⌐S42
PATTERN           x₁ =x₁ +△x
```

$$y_1 = y_1 + \triangle y$$
$$x_1 = x_1 + \triangle x$$

FIG. 5A

FIG. 5B

FIG. 5C

FIG. 5D

# FIG. 6A

13   38

# FIG. 6B

41   13

39   40

# FIG. 7

6   3   4

| CAMERA | A/D | MEMORY |

7

UP

European
Patent Office

**EUROPEAN SEARCH
REPORT**

Application Number

**EP 91 10 2162**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | WO-A-9 001 748  (HUGHES AIRCRAFT COMPANY)<br>* page 6, line 1 - page 7, line 29 * * page 9, line 21 - page 10, line 31; figures 1, 3 *<br>— — — | 1,2,3,5,7, 8 | G 01 P 3/38<br>G 06 F 15/70 |
| Y | EP-A-0 330 455  (TOSHIBA)<br>* column 16, line 26 - column 17, line 47 * * column 21, line 13 - column 22, line 14 @ column 22, line 59 - column 23, line 8; figures 24-26, 31-40 *<br>— ·— — | 3,5,7,8 | |
| A | WO-A-9 001 706  (HUGHES AIRCRAFT COMPANY)<br>* page 6, line 25 - page 7, line 1 * * page 8, line 27 - page 10, line 24; figures 1-3 *<br>— — — | 1,7,8 | |
| A | US-A-4 449 144  (SUZUKI)<br>* column 1, lines 5 - 34 * * column 6, lines 22 - 34; figures 2, 9 *<br>— — — | 1,9 | |
| A | ADVANCES IN INSTRUMENTATION. vol. 43, no. 1, 1988, PITTSBURGH US<br>& Reza: "Moving object tracking in industrial work stations"<br>* abstract; figures 1-5 *<br>— — — — — | 1,7,8 | |
| | | | TECHNICAL FIELDS SEARCHED (Int. Cl.5) |
| | | | G 01 P<br>G 06 F |

| The present search report has been drawn up for all claims | | |
|---|---|---|
| Place of search | Date of completion of search | Examiner |
| The Hague | 28 June 91 | ROBINSON M.A. |